Europäisches Patentamt

European Patent Office

Office européen des brevets

(19)

(11) Publication number: **0 311 031**
**A2**

# (12) EUROPEAN PATENT APPLICATION

(21) Application number: 88116439.6

(51) Int. Cl.⁴: **H02P 7/622**

(22) Date of filing: 05.10.88

(30) Priority: 06.10.87 DK 5244/87

(43) Date of publication of application:
**12.04.89 Bulletin 89/15**

(84) Designated Contracting States:
**AT BE CH DE ES FR GB GR IT LI LU NL SE**

(71) Applicant: **GRUNDFOS INTERNATIONAL A/S**
**7-11, Poul Due Jensensvej**
**DK-8850 Bjerringbro(DK)**

(72) Inventor: **Jensen, Niels Due**
**Pilevej 11**
**DK-8210 Bjerringbro(DK)**
Inventor: **Poulsen, Preben**
**Halmstruphojvej**
**DK-8210 Arhus V(DK)**

(74) Representative: **Wilcken, Thomas, Dipl.-Ing. et al**
**Musterbahn 1**
**D-2400 Lübeck(DE)**

(54) **A method and an electric circuit for controlling an AC-motor, and a circulation pump driven by a motor controlled in this manner.**

(57) A method of controlling the rotary speed of a single-phase ac-motor, for instance a motor driving a circulation pump, said motor comprising a power winding and an auxiliary winding connected in series with a capacitor. A switch is connected in series with the power winding for connecting and disconnecting the ac-voltage at or directly subsequent to a zero crossing. The method comprises connecting the auxiliary winding permanently and controlling the switch to connect the power winding in a predetermined sequence given by a predetermined connection time periodically repeated with a predetermined period. Both the period and the connection time are chosen as an integral multiple of one half cycle of the applied ac-voltage, i.e. the supply voltage, and the connection time is less than or equal to the period. This results in an improved even rotation of the motor as well as a decrease in acoustic noise. Moreover, losses are considerably less and the switch can be held small.

Fig.1

EP 0 311 031 A2

# A METHOD AND AN ELECTRIC CIRCUIT FOR CONTROLLING AN AC-MOTOR, AND A CIRCULATION PUMP DRIVEN BY A MOTOR CONTROLLED IN THIS MANNER

## Field of the Invention

The invention relates to a method for controlling the rotary speed of a single-phase ac-motor, for instance a motor driving a circulation pump, said motor comprising a power winding and at least one auxiliary winding and a controlled switch, such as a triac, for connecting and disconnecting the power winding, the switch being controlled to effectuate the connection at a zero crossing of the ac-voltage applied.

## Background Art

When controlling an ac-motor it is desirable to have the control means depend on the load of the motor and preferably to let the control means cover the largest possible load range or speed range. One control method giving a very extensive load range is the well-known phase-control. This control method is, however, disadvantageous in that the motor current is connected at a moment, where the momentary value of the voltage can be considerable resulting in a pronounced noise transient. This is, of course, undesirable. Thus it has been chosen to limit the present method to connecting only during zero crossing of the ac-voltage, as described above.

DE-OS no. 3.124.901A discloses a control circuit for a single-phase ac-motor having a power winding and auxiliary windings connected in series to a capacitor. The series connection of the auxiliary windings and the capacitor is coupled to the input terminals of the motor. The power winding is connected in series to a triac, the latter series connection being coupled to the motor terminals. The triac is controlled by a control circuit allowing the rotary speed of the motor to be controlled. However, switching of the motor does not take place during the zero crossing of the ac-voltage, thus not obtaining the desired noise-free connection.

DE-OS no. 3.110.308A discloses the switching on of both motor windings during a zero crossing. At least one complete sine wave is passed through a triac depending on a control signal from a suitably adapted control circuit, such as a programmed control of a pump.

According to the present invention the method comprises connecting the auxiliary winding permanently and controlling the switch to connect the power winding in a predetermined sequence given by a predetermined connection time periodically repeated with a predetermined period both the period and the connection time being chosen as an integral multiple of one half cycle of the applied ac-voltage, i.e. the supply voltage, and the connection time being less than or equal to the period.

The connection time and the period can be chosen relatively freely, since they are only restricted in being integral multiples of one half cycle of the applied ac-voltage. Necessarily the connection time is less than or equal to the period. Comparatively short periods are, however, preferred. This control method allows a large number of possible load points for the ac-motor, as described in greater detail in the preferred embodiments of the invention.

The permanent connection of the auxiliary winding or windings permits the motor to rotate more evenly compared to the controlled motor disclosed in DE-OS 3.110.308A. Furthermore, both acoustic (optionally audible) and electric noise is reduced. Moreover the current through the switch is decreased (when the current in the auxiliary winding is not to pass through the switch), thus also decreasing power losses in the switch. As a result a small switch can be employed.

To obtain the desired load point the period is chosen to be n x T/2, with $2 \leq n \leq 20$, and the connection time is chosen to be m x T/2, with $1 \leq m \leq n$, n and m being integers and T the ac-cycle of the applied voltage.

In a further development of the inventive method the connection time is computed as described in claims 3 and 4, for instance by $m = m_1$ and $m = m_1 + 1$. Thus a series of intermediate average load points for the motor is obtained, said load points being approx. right between the other load points.

Furthermore the invention relates to an electric circuit for carrying out the above inventive method, and a circulation pump comprising such an electric circuit.

The electric circuit allows a flexible control of the speed of the circulation pump, since the load points obtained are so close to each other that in practice this control corresponds to a continuously variable control method.

## Summary of the Invention

## Brief Description of the Drawings

The invention is described in greater detail below with reference to the accompanying drawings, in which

FIG. 1 illustrates an inventive electric circuit for controlling the rotary speed of a single-phase ac-motor, where a triac for connecting and disconnecting the ac-current is connected in series to the power winding,

FIG. 2 illustrates another embodiment of the electric circuit of FIG. 1, where the auxiliary winding comprises two sections and where the junction point of the auxiliary winding feeds the power winding,

FIG. 3 shows an example of a control circuit,

FIG. 4 illustrates the supply voltage and the voltage across the power winding as a function of time,

FIG. 5 illustrates variations in rotary speed as a function of time with an inventive control circuit and with a known control,

FIG. 6 illustrates the torque as a function of the rotary speed with and without connected power winding, as well as a curve for a squared load torque,

FIG. 7 illustrates a load curve where the load points for the inventive circuit are indicated,

FIG. 8 is a block diagram of an example of a control circuit,

FIG. 9 is a flow chart of the main program of a microcomputer, and

FIG. 10 is a flow chart of the interrupt program of the microcomputer.

## Description of the Preferred Embodiments

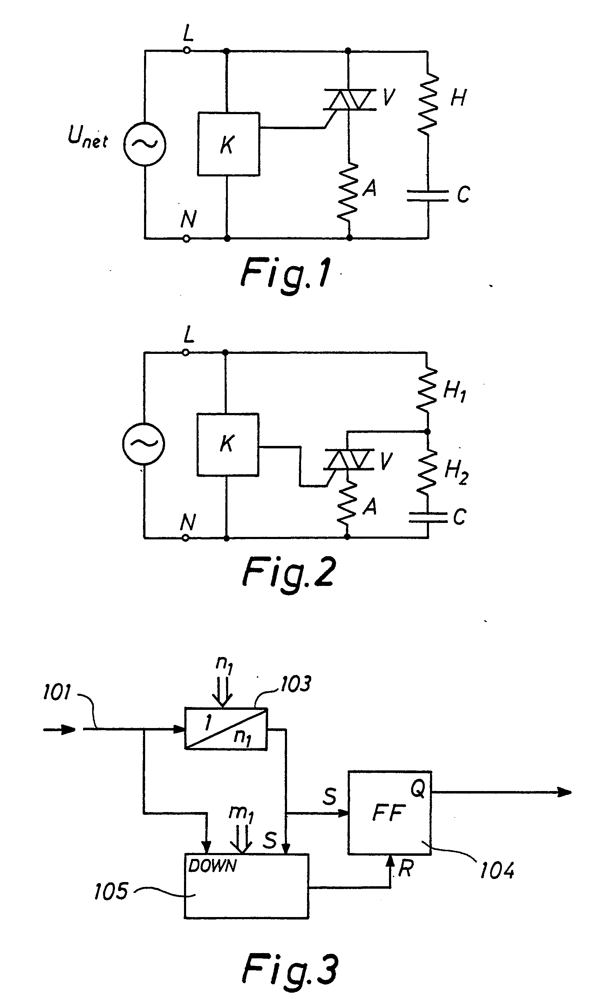

FIG. 1 illustrates an embodiment of an inventive electric circuit with a power winding A of an electric motor and an auxiliary winding H connected in series to a capacitor C. The power winding A is in series with a triac V and parallel to the above auxiliary winding H and capacitor C. L and N are terminals to which a supply voltage $U_{net}$ is applied. The triac V is controlled by a control circuit K.

The control circuit K is adapted in such a way that current is only supplied to the power winding in an integral multiple of half cycles $m \times T/2$, also called a connection time $t_1$. The connection time $t_1$ is repeated periodically with a predetermined period $\tau$ being an integral multiple of half cycles $n \times T/2$.

Such a control circuit can be carried out in many different ways. One example of a control circuit K is diagrammatically shown in FIG. 3. The input signal in a line 101 is a pulse signal corresponding to each zero crossing of the ac-voltage and derives from the applied ac-voltage. The signal is led to a divider or a counter 103 transmitting a pulse for each $n_1$ pulse received. The divider 103 thus determines the period as $n_1 \times T/2$. The output pulse from the divider 103 is used to set a flipflop 104. The input signal on the line 101 is moreover transmitted to a counter 105 also set by the output pulse from the divider 103. The counter 105 is adjusted to count down from $m_1$ corresponding to a connection time $t_1$ of $m_1 \times T/2$. The output signal from the counter 105 is used to reset the flipflop 104 corresponding to the desired connection time $m_1 \times T/2$ and period $n \times_1 T/2$.

The control circuit K can, however, be carried out in many different ways by for instance discrete logical components, by hybrid circuits or integrated circuits.

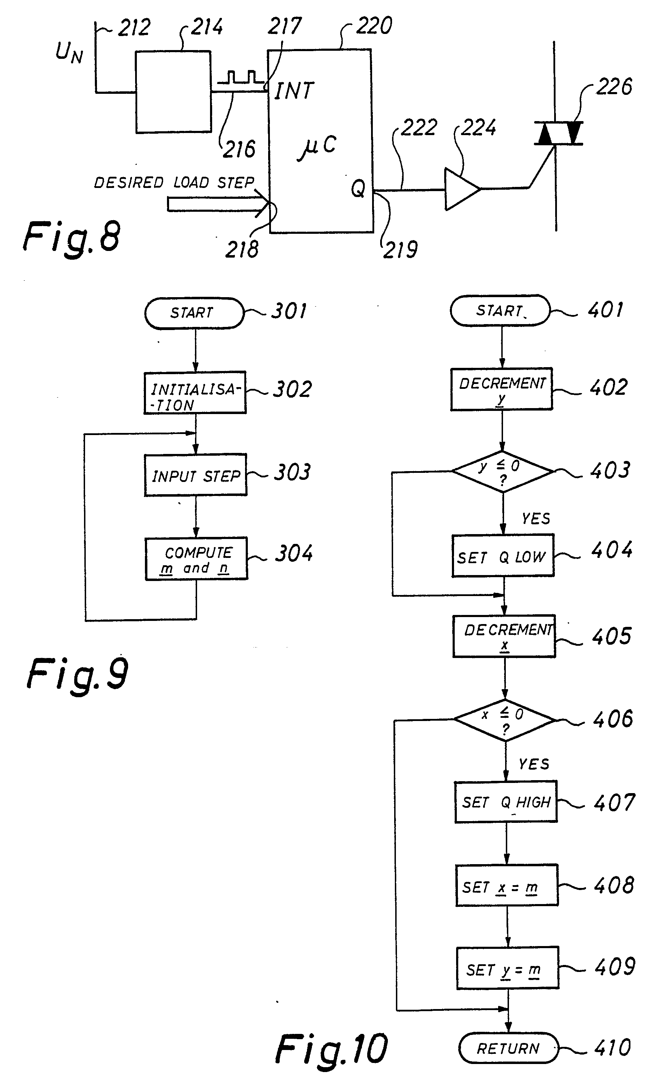

The circuit is preferably implemented by a suitably programmed microcomputer, such as shown in FIGS. 8, 9 and 10. The supply voltage $U_{net}$ to the motor is connected to an input of a zero voltage detector 214 via a line 212. The output of said detector emits a pulse at each zero crossing of the supply voltage $U_{net}$ on a line 216 connected to an interrupt input INT 217 of a microcomputer 220.

At another input 218 of the microcomputer a signal is received expressing the load or speed step at which the motor is desired to run. The output port Q 219 of the microcomputer, which is either high or low, is connected to an amplifier 224 via a line 222. The output of the amplifier 224 is coupled to a control port on a triac 226. The triac 226 corresponds to the triac V of FIGS. 1 and 2.

The microcomputer is programmed so that it operates according to the flow charts of FIGS. 9 and 10. A main program handles the upstart 301 and the initialization 302 of the microcomputer as well as the input of the desired speed or load step at 303, cf. FIG. 9. On the basis of said step the microcomputer computes suitable values for $n$ and $m$, preferably by means of tables for $n$ and $m$ as a function of the input step stored in a memory of the microcomputer.

An interrupt program starts at 401 each time the INT port of the microcomputer receives a pulse from the zero voltage detector 414. The interrupt program operates with a value $y$ which is reduced by one at 402. If $y$ is still larger than zero, then the program jumps from 403 to 405. If $y$ is less than or equal to zero at 403, Q is set low at 404. In other words the output signal of the microcomputer on the line 222 goes low. Thus the control signal to the triac goes low, and the triac 226 stops the current through the power winding A at the next zero crossing of the supply voltage. This corresponds to the desired connection time $t_1$ having run out. This part of the program thus counts down y by one each time the supply voltage crosses zero or, in other words, each half cycle of the supply frequency. At 405 a value x is counted down by one, and at 406 it is checked, whether x is less than or equal to zero. If x is equal to zero, then this corresponds to a complete period $\tau$ having passed and the output Q 219 of the microcomputer is set high, as shown at 407, whereby the triac 226 in FIG. 8 is triggered. Thereupon the interrupt program is made ready for a new period by setting x = n at 408 and setting y = m at 409. Then the interrupt program returns to the main program. If x > 0 at 406, there is a direct jump from 406 to 410, where the interrupt program returns to the main program and awaits the next interrupt command on input 217 from the zero voltage detector 214.

It is apparent from FIGS. 9 and 10, that the microprocessor goes through interrupt program n - 1 times by passing 407-409 while x > 0. When x = 0, i.e. at the nth time, the program steps 407, 408, 409 are included. Thus the program determines the period $\tau$ = n x T/2. At the beginning of a new period the output port Q 219 of the microcomputer is set high at 407 thus triggering the triac 226. The connection time $t_1$ is determined by m and thus by y, the latter being equalled to m at 409. The triac remains triggered until the command "Q low" is given at 404 subsequent to y having reached zero. The latter corresponds to a connection time $t_1$ m x T/2.

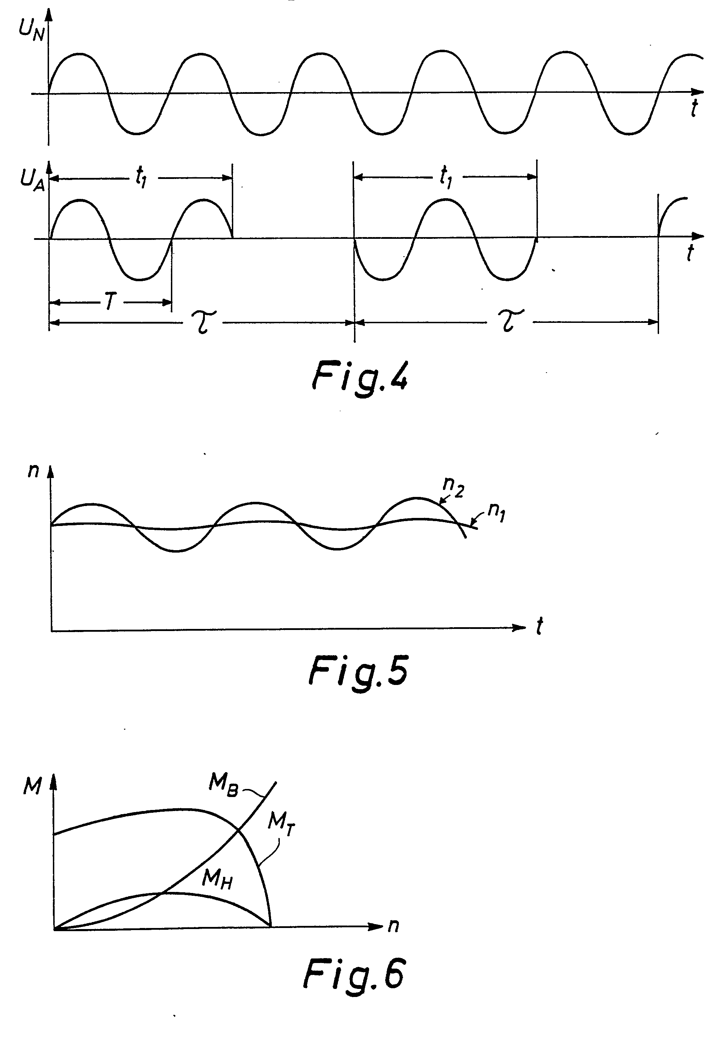

Using the described control circuit the average torque developed by the motor is less than or optionally equal to the maximum torque $M_T$ obtained with a continuously connected power winding. At the same time said torque is greater than or optionally equal to the minimum torque $M_H$ resulting when the auxiliary winding H alone is connected, cf. FIG. 5. At a given combination of period $\tau$ and connection time $t_1$ -1 the motor develops a corresponding torque between $M_H$ and $M_T$ in FIG. 5. In practice a suitable choice of period and connection time allows obtaining almost any desired load point or speed.

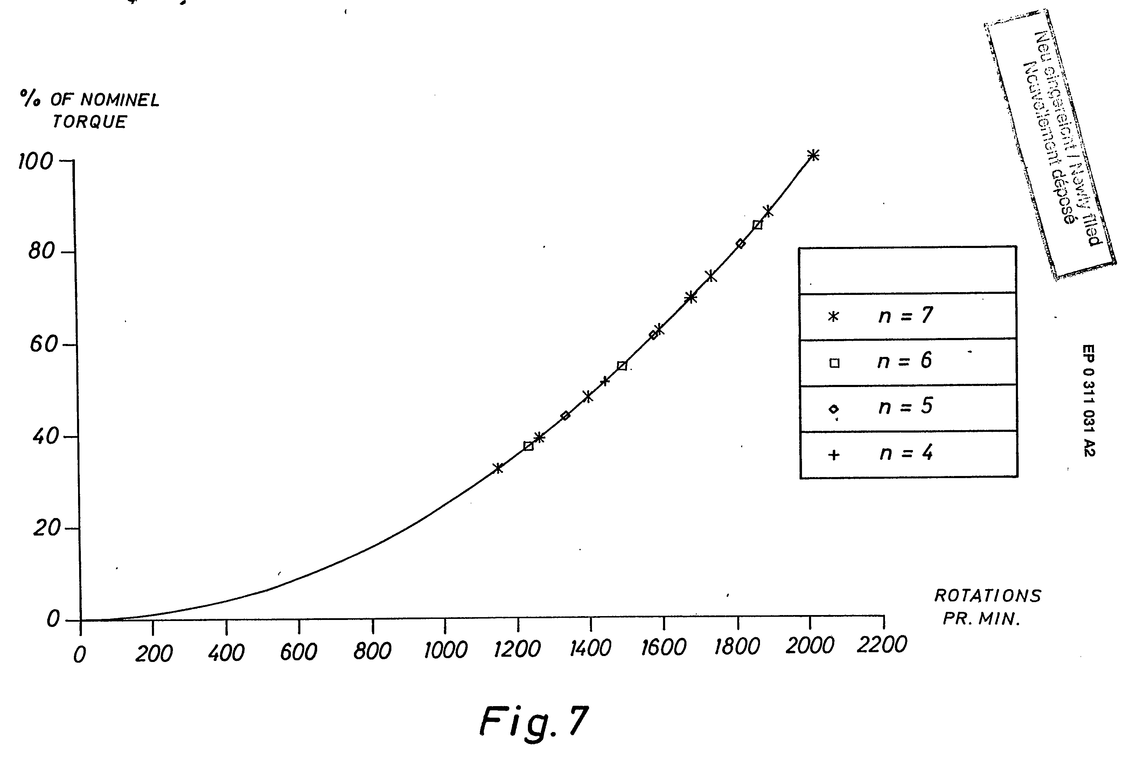

In one embodiment n can assume the values four, five, six and seven, and m can assume the values two, three, four, five, six, and seven. Thus the following ratios of connection time to period can be obtained: 2/4, 3/4, 2/5, 3/5, 4/5, 2/6, 3/6, 4/6, 5/6, 2/7, 3/7, 4/7, 5/7, 6/7, 7/7. The speed corresponding to those ratios are indicated in the curve of FIG. 7 showing a pump characteristic with the torque of the motor as the ordinate and the rotary speed as abscissa. It is apparent that the control is almost continuously variable across a comparatively large area.

Preferably n is set to eight while m is varied from one to eight, as this permits a sufficient regulation for many purposes.

FIG. 2 illustrates another embodiment of an inventive electric circuit for a motor having a two-part auxiliary winding $H_1$ and $H_2$. The junction point of the auxiliary winding is connected to the power winding A. Otherwise this electric circuit corresponds exactly to the electric circuit of FIG. 1 and operates in a corresponding manner. The electric circuit is therefore not described further, as reference is made to the above.

The periodic connecting and disconnecting of the power winding A according to the inventive method causes the rotary speed N to vary to a greater or lesser degree depending on the inertia of the loaded motor and the choice of period and connection time, cf. FIG. 4. The curve $N_1$ of FIG. 4 shows typical fluctuations of an inventive electric circuit, while the curve $N_2$ shows corresponding typical fluctuations of a known electric circuit, where the triac disconnects the power winding as well as the auxiliary windings. It is apparent from FIG. 4 that the fluctuations with an inventive electric circuit are considerably less.

To further limit undesired fluctuations it has been found suitable to use relatively short periods and correspondingly short connection times. In a preferred embodiment n is thus max. ten corresponding to the longest period used being 10 x 10 ms = 100 ms.

To ensure an adequate number of sufficiently small load or speed steps, the control circuit is advantageously adapted to let m be a value $m_1$ such as three, in one period and in the other period let m be a value $m_1$ + 1, i.e. four. In the following period m is again the first value $m_1$, i.e. three. The generated average torque of the motor thus corresponds in practice to a value m = 3 1/2. By varying m according to a predetermined sequence the torque can be completely adapted to any given needs.

The input parameters n and m of the control circuit for determining the period and the connection time can be supplied via manually operated switches, such as a keyboard. They can also be supplied otherwise, for instance from an electronic circuit for detecting the load or speed of the motor or the pump. Preferably the parameters are supplied by detection of the rotary speed. Thus the period and the connection time can be adjusted depending on the load of the pump.

Due to the advantages obtained with respect to loss and noise compared to known control principles, the inventive control circuit can be made smaller and less expensive. Furthermore the obtained control result is better compared to known systems.

The inventive control circuit can be varied in many ways without thereby deviating from the scope of the invention.

Claims

1. A method of controlling the rotary speed of a single-phase ac-motor, for instance a motor driving a circulation pump, said motor comprising a power winding and at least one auxiliary winding and a controlled switch, such as a triac, for connecting and disconnecting the power winding, the switch being controlled to effectuate the connection at a zero crossing of the ac-voltage applied, wherein the method comprises connecting the auxiliary winding (H) permanently and controlling the switch (V) to connect the power winding in a predetermined sequence given by a predetermined connection time ($t_1$) periodically repeated with a predetermined period ($\tau$), both the period and the connection time being chosen as an integral multiple of one half cycle of the applied ac-voltage, i.e. the supply voltage, and the connection time being less than or equal to the period.

2. A method as in claim 1, wherein for a given, desired load point the period ($\tau$) is chosen to be $n \times T/2$, with $2 \leq n \leq 20$, and the connection time ($t_1$) is chosen to be $m \times T/2$, with $1 \leq m \leq n$, $n$ and $m$ being integers and $T$ the ac-cycle of the applied voltage.

3. A method as in claim 1, wherein $n$ is maintained at a given value $n = n_1$ while $m$ is varied according to a predetermined sequence $m = m_1 = m_2, m_3, \ldots$ in a given number of periods.

4. A method as in claim 1, wherein in a first period ($\tau$) $m = m_1$, with $1 \leq m_1 \leq n_1 - 1$, and in the subsequent period $m = m_1 + 1$, whereupon $m$ is again assigned the value $m_1$ in the next period and so forth.

5. A method as in claim 1, wherein $n \leq 10$.

6. A method as in claim 1, wherein $n = 8$.

7. A method as in claim 1, wherein either one or both the predetermined integers $m$ $n$ are currently determined based on detected operational conditions of the motor, such as the rotary speed.

8. An electric circuit for carrying out the method of claim 1, said electric circuit including a power winding of an ac-motor, connected in series with a controlled switch, such as a triac, and including at least one auxiliary winding, and further including a control circuit, the output port of which is connected to the control input of the switch, wherein the control circuit (K) is adapted to determine the period ($\tau$) and the connection time ($t_1$) the output port of the control circuit emitting a signal to the switch (V), said signal causing the switch to allow current to flow through the power winding (A) during the connection time ($t_1$) and to block the current through the power winding (A) during the rest of the period.

9. An electric circuit as in claim 8, wherein the control circuit (K) comprises a microcomputer with a program to determine the period and the connection time on the basis of supplied parameters, such as input signals corresponding to detected operational values, for instance rotary speed, and the microcomputer further including a memory with a table of suitable values of $m$ and $n$ as functions of the supplied parameters.

10. An electric circuit as in claim 8, wherein the ac-motor comprises a two-part auxiliary winding ($H_1$, $H_2$) and the junction point of the auxiliary winding is connected to the power winding (A) through the controlled switch (V).

11. Circulation pump with a single-phase ac-motor as driving means, wherein the ac-motor comprises an electric circuit as in claim 8, and the control circuit is integral with the motor.

12. Circulation pump with a single-phase ac-motor as driving means, wherein the ac-motor comprises an electric circuit as in claim 9, and the control circuit is integral with the motor.

13. Circulation pump with a single-phase ac-motor as driving means, wherein the ac-motor comprises an electric circuit as in claim 10, and the control circuit is integral with the motor.

Fig.1

Fig.2

Fig.3

**Fig.4**

**Fig.5**

**Fig.6**

Fig.7

*Fig.8*

*Fig.9*

*Fig.10*